# EUROPEAN PATENT SPECIFICATION

(11) **EP 3 486 438 B1**
(45) Date of publication and mention of the grant of the patent: **09.09.2020**
(21) Application number: 18205669.7
(22) Date of filing: 12.11.2018
(51) Int. Cl.: F01D 25/12, F02C 7/18, F01D 5/08, F01D 5/18, F01D 9/06

(54) **GAS TURBINE INCLUDING EXTERNAL COOLING SYSTEM AND METHOD OF COOLING THE SAME**
GASTURBINEN MIT EXTERNEM KÜHLSYSTEM UND VERFAHREN ZUR KÜHLUNG DAVON
TURBINE À GAZ COMPRENANT UN SYSTÈME DE REFROIDISSEMENT EXTERNE ET SON PROCÉDÉ DE REFROIDISSEMENT

(30) Priority: 21.11.2017 KR 20170155403
(43) Date of publication of application: 22.05.2019
(73) Proprietor: Doosan Heavy Industries & Construction Co., Ltd, Changwon-si, Gyeongsangnam-do 51711 (KR)
(72) Inventor: KIM, Dong Hwa, 07524 Seoul (KR); KIM, Dong Kwon, 34048 Daejeon (KR); KIM, Jong Seon, 34008 Daejeon (KR); CHO, Geon Hwan, 51017 Gyeongsangnam-do (KR)
(74) Representative: Ter Meer Steinmeister & Partner

(56) References cited:
- EP-A1- 1 892 378
- US-A1- 2010 175 387
- US-A1- 2017 016 397

## Description

This application claims priority to Korean Patent Application No. 10-2017-0155403, filed on November 21, 2017.

### BACKGROUND OF THE DISCLOSURE

### Field of the Disclosure

Exemplary embodiments of the present disclosure relate to a gas turbine including an external cooling system and a method of cooling the gas turbine, and more particularly, a gas turbine in which a cooling air supply passage is formed to bypass the gas turbine rather than being formed in a central shaft of the gas turbine. This allows the vanes and blades of the gas turbine to be cooled by a special cooling air passage so that the consumption of cooling air may be reduced while cooling effect is not reduced, and the flow rate of air may be more easily controlled.

### Description of the Related Art

Generally, a turbine is a machine which converts energy of a fluid such as water, gas, or steam into mechanical energy. Typically, a turbo machine, in which a plurality of blades are embedded around a circumferential portion of a rotating body so that the rotating body is rotated at a high speed by impulsive force or reactive force generated by discharging steam or gas to the blades, is referred to as a turbine.

Such turbines are classified into a water turbine using energy of water located at a high elevation, a steam turbine using energy of steam, an air turbine using energy of high-pressure compressed air, a gas turbine using energy of high-temperature/high-pressure gas, and so forth.

The gas turbine includes a compressor, a combustor, a turbine, and a rotor, and is operated by the principle of driving the turbine using powerful energy generated by combusting fuel with compressed air. Such gas turbines may be part of an electrical generator.

With regard to this gas turbine operations, several combustors may be provided for a single generator. In addition, a plurality of fuel supply nozzles are provided for the plurality of combustors. Each fuel supply nozzle ejects a mixture of fuel and air to generate high-temperature flames. The heat and temperature of the flames are directly transmitted to turbine blades and other components of the generator.

Here, although each component is formed of material having excellent thermal resistance, the expected lifetime of a particular component may be reduced if the component is exposed to excessively high temperatures for a long period of time. In an effort to overcome the foregoing problem, some of the air compressed by the compressor is supplied to the turbine blades and other components of the generator for cooling thereof, thus preventing the temperatures of the related components from being rapidly increased.

With regard to this, conventional techniques have employed a scheme in which compressed air coming out of a compressor including a plurality of rotating bodies is supplied to turbine blades through a tube passing through a rotor (central shaft) of a gas turbine.

However, the conventional scheme is problematic in that flow loss via an internal passage of the rotor of the gas turbine is comparatively high, and cooling air consumption is increased in the case of a gas turbine having a high turbine inlet temperature and a high compression ratio.

Furthermore, the overall diameter of a center hole of the rotor needs to be increased, because a space, which accommodates a separate tube to provide cooling air, separate from an internal space for the rotor is additionally required. Therefore, there is a problem in that the structural design of an internal central shaft of a generator and other devices becomes complicated.

This results in a reduction in aerodynamic efficiency of the compressor and the gas turbine.
US 2017/016397 A1 discloses a gas turbine cooling system provided with cooling air supply paths around outer casing. The cooling air supply paths are not provided to the rotor center shaft of the gas turbine but provided around the outer casing of the gas turbine so as to achieve the increased effect in the aerodynamic efficiency of the compressor and the turbine. EP 1 892 378 A1 and US 2010/175387 A1 disclose different cooling schemes for a gas turbine.

### SUMMARY OF THE DISCLOSURE

An object of the present disclosure is to provide a gas turbine and a cooling method thereof in which a cooling air supply passage is formed to bypass the gas turbine rather than being formed in a central shaft of the gas turbine, and the vanes and blades of the gas turbine are cooled by a special cooling air supply passage so that the consumption of cooling air may be reduced, and the flow rate of air may be easily controlled.

The object is solved by the features of the independent claims. Preferred embodiments are given in the dependent claims.

To achieve the above object, in the present disclosure, a cooling air supply passage, which is used for extracting air out of a compressor of the gas turbine and diverting the air to the outside, is formed outside the gas turbine rather than being formed in a central shaft of the gas turbine. In addition, the vanes and blades of the gas turbine are cooled by a special cooling air supply passage.

Consequently, the overall consumption of cooling air may be reduced, and the flow rate of air may be more easily controlled.

Other objects and advantages of the present disclosure can be understood by the following description, and become apparent with reference to the embodiments of the present disclosure. Also, it will be clear to those skilled in the art to which the present disclosure pertains that the objects and advantages of the present disclosure can be realized by the means as claimed and combinations thereof.

In accordance with one aspect of the present disclosure, a gas turbine may include: a casing; a compressor disposed in the casing and configured to draw air thereinto and compress the air to a high pressure; a combustor configured to mix fuel with the air compressed by the compressor and combust a mixture of the fuel and the air; a turbine configured to rotate a plurality of turbine blades using high-temperature and high-pressure combustion gas discharged from the combustor and generate electricity; a plurality of external cooling passages configured to extract air from different positions of the compressor to an outside of the casing, and supply cooling air to the turbine without having the cooling air pass through a central shaft of the turbine; and an outlet cooling passage configured to extract air from an outlet of the compressor and supply cooling air to the turbine without having the cooling air pass through the central shaft of the turbine.

In an embodiment, the turbine may include the plurality of turbine blades, and a plurality of turbine vanes fixed to the casing and arranged alternately with the turbine blades. The outlet cooling passage may include an outlet-outside cooling passage configured to extract air from the outlet of the compressor and supply the air to the turbine vanes, and an outlet-inside cooling passage configured to extract air from the outlet of the compressor and supply the air to the turbine blades. The gas turbine may further include at least one connection cooling passage configured to couple and communicate cooling passages of a pair of turbine blade and turbine vane that are disposed in at least one identical stage among the turbine blades and the turbine vanes, with each other.

In an embodiment, the outlet cooling passage may supply air both to a first stage turbine vane of the plurality of turbine vanes and to a first stage turbine blade of the plurality of turbine blades. The plurality of external cooling passages may supply air both to at least one turbine vane of the plurality of turbine vanes other than the first stage turbine vane, and to at least one of turbine blades of stages, in which the connection cooling passage is not formed, among the plurality of turbine blades other than the first stage turbine blade.

In an embodiment, the outlet cooling passage may include: an outlet-outside cooling passage configured to supply air to the first stage turbine vane; and an outlet-inside cooling passage configured to supply air to the first stage turbine blade. The plurality of external cooling passages may include: a first external cooling passage configured to supply air to a fourth stage turbine vane and a fourth stage turbine blade; a second external cooling passage configured to supply air to a third stage turbine vane; and a third external cooling passage configured to supply air to a second stage turbine vane. The connection cooling passage may be formed in each of the pairs of turbine blades and turbine vanes of the second and third stages.

In an embodiment, the outlet cooling passage may supply air both to a first stage turbine vane of the plurality of turbine vanes and to first and second stage turbine blades of the plurality of turbine blades. The plurality of external cooling passages may supply air both to at least one turbine vane of the plurality of turbine vanes other than the first stage turbine vane, and to at least one of turbine blades of stages, in which the connection cooling passage is not formed, among the plurality of turbine blades other than the first and second stage turbine blades.

In an embodiment, the outlet cooling passage may include: an outlet-outside cooling passage configured to supply air to the first stage turbine vane; a first outlet-inside cooling passage configured to supply air to the first stage turbine blade; and a second outlet-inside cooling passage configured to supply air to the second stage turbine blade. The plurality of external cooling passages may include: a first external cooling passage configured to supply air to a fourth stage turbine vane and a fourth stage turbine blade; a second external cooling passage configured to supply air to a third stage turbine vane; a third external cooling passage configured to supply air to a second stage turbine vane. The connection cooling passage may be formed in the pair of turbine blade and turbine vane of the third stage.

In an embodiment, the plurality of external cooling passages may extract air from the respective different positions of the compressor, and, as a stage number of a turbine vane to which air is to be supplied increases, a distance between the turbine and the position at which the corresponding external cooling passage extracts the air is increased.

In an embodiment, the gas turbine may further include a cooling unit configured to cool air flowing through at least one passage of the plurality of external cooling passages and the outlet-inside cooling passage.

In an embodiment, the cooling unit may cool air flowing through the respective passages to different temperatures.

In an embodiment, the cooling unit may include: a second cooler disposed on the second external cooling passage; a third cooler disposed on the third external cooling passage; and a fourth cooler disposed on the outlet-inside cooling passage.

In an embodiment, the cooling unit may further include a first cooler disposed on the first external cooling passage.

In an embodiment, at least one cooling air control valve may be provided on an inlet or path of each of the plurality of external cooling passages.

In an embodiment, at least one cooling air control valve may be provided on an inlet or path of each of the outlet-outside cooling passage and the external-inside cooling passage.

In an embodiment, the connection cooling passage may extend through lower ends of the turbine blade and the turbine vane that are disposed in an identical stage such that air is drawn into a lower portion of the turbine blade.

In an embodiment, the outlet-inside cooling passage may be formed through a lower end of the corresponding turbine blade such that air is drawn into a lower portion of the corresponding turbine blade.

In an embodiment, a pre-swirler may be provided at at least one of a position of the first outlet-inside cooling passage at which air is drawn into the lower portion of the corresponding turbine blade and a position of the connection cooling passage at which air is drawn into the lower portion of the corresponding turbine blade.

In an embodiment, a sealing member may be provided at at least one of a position of the first outlet-inside cooling passage at which air is drawn into the lower portion of the corresponding turbine blade and a position of the connection cooling passage at which air is drawn into the lower portion of the corresponding turbine blade.

In accordance with another aspect of the present disclosure, a method of cooling a gas turbine including a casing, and a compressor, a combustor, and a turbine which are disposed in the casing may include: an external cooling air supply operation of extracting air from different positions of the compressor to an outside of the casing, and supply the air to the turbine; and an outlet cooling air supply operation of extracting air from an outlet of the compressor and supplying the air to the turbine.

In an embodiment, air supplied in the external cooling air supply operation may simultaneously cool a pair of turbine blade and turbine vane of the turbine that are disposed in at least one identical stage.

In an embodiment, the external cooling air supply operation may include a flow rate control operation of controlling a flow rate of cooling air using at least one cooling air control valve provided on an inlet or path of each of the plurality of external cooling passages for extracting air from the different positions of the compressor to the outside of the casing and supplying the air to the turbine.

As described above, according to a gas turbine including an external cooling system and a method of cooling the gas turbine in accordance with the present disclosure, a cooling air supply passage of extracting air out of a compressor of the gas turbine and diverting the air to the outside is formed, and the vanes and blades of the gas turbine are cooled by a single cooling air supply passage. Consequently, the consumption of cooling air may be reduced, and the flow rate of cooling air by the blades/vanes of the turbine may be easily controlled.

Furthermore, air of a plurality of external cooling passages and outlet-inside cooling passages may be cooled to different temperatures by a plurality of coolers before being supplied to the turbine.

In addition, a pre-swirler and a sealing structure may be applied to each turbine blade stage of the turbine, whereby the cooling effect may be enhanced.

Ultimately, the design points and partial load performance of the gas turbine may be improved.

The effects of the present disclosure are not limited to the above-mentioned effects, and it should be understood that the effects of the present disclosure include all effects that can be inferred from the configuration of the invention described in the detailed description of the present disclosure or the appended claims.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a sectional view illustrating a schematic structure of a gas turbine in accordance with an embodiment of the present disclosure;
FIG. 2 is a partial sectional view illustrating an external cooling system in accordance with a first embodiment of the gas turbine of FIG. 1;
FIG. 3 is a partial sectional view illustrating an external cooling system in accordance with a second embodiment of the gas turbine of FIG. 1;
FIG. 4 is an enlarged sectional view illustrating a portion of an internal structure of the gas turbine of FIG. 1; and
FIG. 5 is an enlarged perspective view illustrating pre-swirlers of FIG. 4.

### DESCRIPTION OF THE EMBODIMENTS

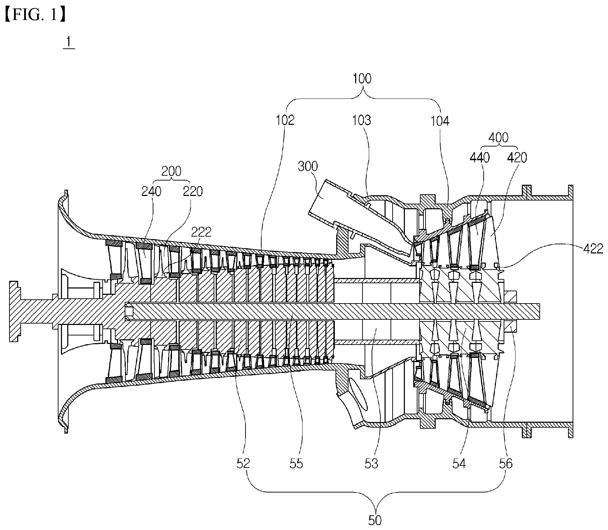

Hereinafter, various embodiments of a gas turbine including an external cooling system and a method of cooling the gas turbine in accordance with the present disclosure will be described with reference to FIGS. 1 to 5.

Furthermore, the terms used in the following description are defined considering the functions of the present disclosure and may vary depending on the intention or usual practice of a user or operator. The following embodiments are only examples of the contents proposed in the claims of the present disclosure rather than limiting the bounds of the present disclosure.

In the drawings, portions which are not related to the present disclosure will be omitted to explain the present disclosure more clearly. Reference should be made to the drawings, in which similar reference numerals are used throughout the different drawings to designate similar components. In addition, when an element is referred to as "comprising" or "including" a component, it does not preclude another component but may further include the other component unless the context clearly indicates otherwise.

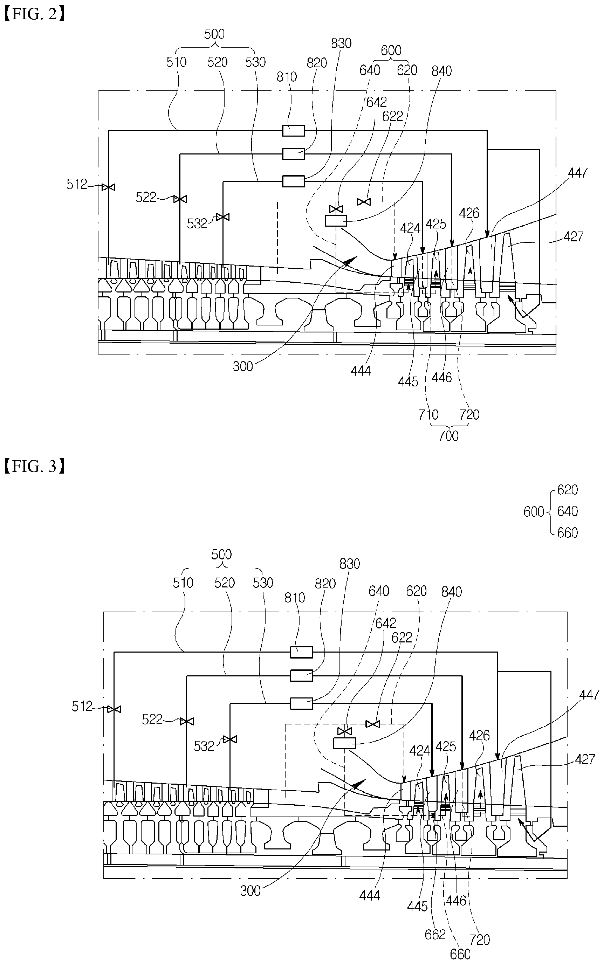

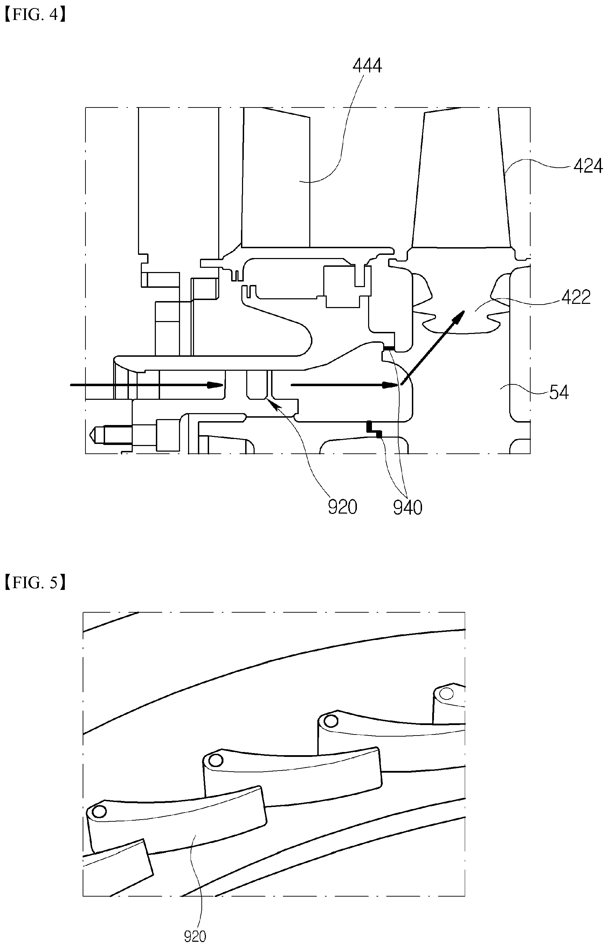

FIG. 1 is a sectional view illustrating a schematic structure of a gas turbine in accordance with an embodiment of the present disclosure, FIG. 2 is a partial sectional view illustrating an external cooling system in accordance with a first embodiment of the gas turbine of FIG. 1, FIG. 3 is a partial sectional view illustrating an external cooling system in accordance with a second embodiment of the gas turbine of FIG. 1, FIG. 4 is an enlarged sectional view illustrating a portion of an internal structure of the gas turbine of FIG. 1, and FIG. 5 is an enlarged perspective view illustrating pre-swirlers of FIG. 4.

Hereinafter, a gas turbine in accordance with an embodiment of the present disclosure will be described with reference to FIG. 1.

The gas turbine 1 in accordance with the embodiment of the present disclosure may chiefly include a casing 100, a compressor 200 disposed in the casing 100 and configured to draw air thereinto and compress the air to a high pressure, a plurality of combustors 300 configured to mix fuel with air compressed by the compressor 200 and combust the mixture, and a turbine 400 configured to rotate a plurality of turbine blades using the high-temperature and high-pressure combustion gas discharged from the combustors 300 and thus generate electricity.

The casing 100 may include a compressor casing 102 which houses the compressor 200 therein, a combustor casing 103 which houses the combustors 300 therein, and a turbine casing 104 which houses the turbine 400 therein. However, the present disclosure is not limited to this. For example, the compressor casing 102, the combustor casing 103, and the turbine casing 104 may be integrated with each other.

The compressor casing 102, the combustor casing 103, and the turbine casing 104 may be successively arranged from an upstream side to a downstream side in a fluid flow direction.

A rotor (central shaft; 50) may be rotatably provided in the casing 100. A generator (not shown) for generating electricity may be interlocked with the rotor 50. A diffuser may be provided at the downstream side of the casing 100 so that combustion gas that has passed through the turbine 400 is discharged to the outside through the diffuser.

The rotor 50 may include a compressor rotor disk 52, a turbine rotor disk 54, a torque tube 53, a tie rod 55, and a fastening nut 56. The compressor rotor disk 52 may be housed in the compressor casing 102. The turbine rotor disk 54 may be housed in the turbine casing 104. The torque tube 53 may be housed in the combustor casing 103 and couple the compressor rotor disk 52 with the turbine rotor disk 54. The tie rod 550 and the fastening nut 560 may couple the compressor rotor disk 520, the torque tube 530, and the turbine rotor disk 540 with each other.

In the embodiment, a plurality of (e.g., fourteen sheets of) compressor rotor disks 52 may be provided. The plurality of compressor rotor disks 52 may be arranged along an axial direction of the rotor 50. In other words, the compressor rotor disks 52 may form a multi-stage structure.

Each of the compressor rotor disks 52 may have an approximately circular plate shape, and include in an outer circumferential surface thereof a compressor blade coupling slot through which a compressor blade 220 to be described later herein is coupled to the compressor rotor disk 520.

The turbine rotor disk 54 may be formed in a manner similar to that of the compressor rotor disk 52. In other words, a plurality of turbine rotor disks 54 may be provided. The plurality of turbine rotor disks 54 may be arranged along the axial direction of the rotor 50. In other words, the turbine rotor disks 54 may form a multi-stage structure.

Furthermore, each of the turbine rotor disks 54 may have an approximately circular plate shape, and include in an outer circumferential surface thereof a turbine blade coupling slot through which a turbine blade 420 to be described later herein is coupled to the turbine rotor disk 540.

The torque tube 53 may be a torque transmission member configured to transmit the rotating force of the turbine rotor disks 54 to the compressor rotor disks 52. One end of the torque tube 530 may be coupled to one of the plurality of compressor rotor disks 52 that is disposed at the most downstream end with respect to an air flow direction. The other end of the torque tube 530 may be coupled to one of the plurality of turbine rotor disks 54 that is disposed at the most upstream end with respect to a combustion gas flow direction. Here, a protrusion may be provided on each of the one and other ends of the torque tube 53. A depression to engage with the corresponding protrusion may be formed in each of the associated compressor rotor disk 52 and the associated turbine rotor disk 54. Thereby, the torque tube 53 may be prevented from rotating relative to the compressor rotor disk 52 or the turbine rotor disk 54.

The torque tube 53 may have a hollow cylindrical shape to allow air supplied from the compressor 200 to flow into the turbine 400 via the torque tube 53.

Taking into account the characteristics of the gas turbine that is continuously operated for a long period of time, the torque tube 53 may be formed to resist to deformation, distortion, etc., and designed to be easily assembled or disassembled to facilitate maintenance.

The tie rod 55 may be provided to pass through the plurality of compressor rotor disks 52, the torque tube 53, and the plurality of turbine rotor disks 54. One end of the tie rod 550 may be coupled in one of the plurality of compressor rotor disks 52 that is disposed at the most upstream end with respect to the air flow direction. The other end of the tie rod 55 may protrude, in a direction opposite to the compressor 200, based on one of the plurality of turbine rotor disks 54 that is disposed at the most downstream end with respect to the combustion gas flow direction, and may be coupled to the fastening nut 56.

Here, the fastening nut 56 may compress, toward the compressor 200, the turbine rotor disk 54 that is disposed at the most downstream end. Thus, as the distance between the compressor rotor disk 52 that is disposed at the most upstream end and the turbine rotor disk 54 that is disposed at the most downstream end is reduced, the plurality of compressor rotor disks 52, the torque tube 53, and the plurality of turbine rotor disks 54 may be compressed in the axial direction of the rotor 50. Consequently, the plurality of compressor rotor disks 52, the torque tube 53, and the plurality of turbine rotor disks 54 may be prevented from moving in the axial direction or rotating relative to each other.

In the present embodiment, the single tie rod is illustrated as being provided to pass through the central portions of the plurality of compressor rotor disks, the torque tube, and the plurality of turbine rotor disks. However, the present disclosure is not limited to this. For example, separate tie rods may be respectively provided in a compressor side and a turbine side, a plurality of tie rods may be arranged along a circumferential direction, or a combination thereof is also possible.

In accordance with the above-mentioned configuration, opposite ends of the rotor 50 may be rotatably supported by bearings, and one end thereof may be coupled to a driving shaft of the generator.

The compressor 200 may include a compressor blade 220 which rotates along with the rotor 50, and a compressor vane 240 which is fixed in the casing 100 and configured to align the flow of air drawn to the compressor blade 220.

In this embodiment, a plurality of compressor blades 220 may be provided. The plurality of compressor blades 220 may form a multi-stage structure along the axial direction of the rotor 50. A plurality of compressor blades 220 may be provided in each stage, and may be radially formed and arranged along a rotation direction of the rotor 50.

In other words, a root part 222 of each of the compressor blades 222 is coupled to a compressor blade coupling slot of the corresponding compressor rotor disk 52. The root part 222 may have a fir-tree shape to prevent the compressor blade 220 from being undesirably removed from the compressor blade coupling slot in a rotational radial direction of the rotor 50.

Likewise, the compressor blade coupling slot may also have a fir-tree shape to correspond to the root part 222 of the compressor blade 220.

In the present embodiment, each of the compressor blade root part 222 and the compressor blade coupling slot is described as having a fir-tree shape, but the present disclosure is not limited thereto, and, for example, each may have a dovetail shape or the like. Alternatively, the compressor blade may be coupled to the compressor rotor disk by using a separate coupling device, e.g., a fastener such as a key or a bolt, other than the above-mentioned coupling scheme.

Here, the compressor rotor disk 52 and the compressor blade 220 are generally coupled to each other in a tangential type or an axial type scheme. The present embodiment employs a so-called axial type scheme in which the compressor blade root part 222 is inserted into the compressor blade coupling slot along the axial direction of the rotor 50, as described above. In the present embodiment, a plurality of compressor blade coupling slots may be formed. The plurality of compressor blade coupling slots may be arranged along a circumferential direction of the compressor rotor disk 52.

In this embodiment, a plurality of compressor vanes 240 may be provided. The plurality of compressor vanes 240 may form a multi-stage structure along the axial direction of the rotor 50. Here, the compressor vanes 240 and the compressor blades 220 may be alternately arranged along the air flow direction.

Furthermore, a plurality of compressor vanes 240 may be provided in each stage, and may be radially formed and arranged along the rotation direction of the rotor 50.

The combustor 300 functions to mix air supplied from the compressor 200 with fuel and combust the fuel mixture to generate high-temperature and high-pressure combustion gas having high energy, and may be configured to increase the temperature of the combustion gas to a heat resistance limit within which the combustor 300 and the turbine can resist heat in an isobaric combustion process.

Here, a plurality of combustors 300 may be provided. The plurality of combustors 300 may be arranged in the combustor casing along the rotation direction of the rotor 50.

Each of the combustors 300 may include a liner into which air compressed by the compressor 200 is drawn, a burner configured to inject fuel to the air drawn into the liner and combust the fuel mixture, and a transition piece configured to guide combustion gas generated by the burner to the turbine.

The liner may include a flame tube which defines a combustion chamber, and a flow sleeve which encloses the flame tube and forms an annular space.

The burner may includes a fuel injection nozzle provided on a front end side of the liner to inject fuel to air drawn into the combustion chamber, and an ignition plug provided in a sidewall of the liner to ignite the fuel mixture formed by mixing the fuel with the air in the combustion chamber.

The transition piece may be configured such that an outer sidewall of the transition piece can be cooled by air supplied from the compressor so as to prevent the transition piece from being damaged by high-temperature combustion gas.

Here, a cooling hole is formed in the transition piece so that air can be injected into the transition piece through the cooling hole so as to cool a main body of the transition piece.

On the one hand, air used to cool the transition piece may flow into the annular space of the liner, and collides with air provided as cooling air from the outside of the flow sleeve through a cooling hole formed in the flow sleeve that forms the outer sidewall of the liner.

Although not shown, a so-called deswirler that functions as a guide vane may be provided between the compressor 200 and the combustor 300 so as to adjust a flow angle at which air is drawn into the combustor 300, to a design flow angle.

The turbine 400 may be formed in a manner similar to that of the compressor 200.

Here, the turbine 400 may include the turbine blade 420 which rotates along with the rotor 50, and a turbine vane 440 which is fixed in the casing 100 and configured to align the flow of combustion gas to be drawn onto the turbine blade 420.

In this embodiment, a plurality of turbine blades 420 may be provided. The plurality of turbine blades 420 may form a multi-stage structure along the axial direction of the rotor 50. In the embodiment, as shown in FIG. 1, the turbine blades 420 may form a 4-stage structure, in which a first stage turbine blade 424, a second stage turbine blade 425, a third stage turbine blade 426, and a fourth stage turbine blade 427 are arranged in sequence from the upstream side to the downstream side along the axial direction of the rotor 50. However, the present disclosure is not limited to this. For example, the number of stages of turbine blades may be less than or greater than four. Furthermore, in each stage, a plurality of turbine blades 420 may be radially formed and arranged along the rotation direction of the rotor 50.

In other words, a root part 422 of each of the turbine blades 420 is coupled to a turbine blade coupling slot of the corresponding turbine rotor disk 54. The root part 422 may have a fir-tree shape to prevent the turbine blade 420 from being undesirably removed from the turbine blade coupling slot in a rotational radial direction of the rotor 50.

Likewise, the turbine blade coupling slot may also have a fir-tree shape to correspond to the root part 422 of the turbine blade 420.

In the present embodiment, each of the turbine blade root part 422 and the turbine blade coupling slots are described as having a fir-tree shape, but the present disclosure is not limited thereto, and, for example, each may have a dovetail shape or the like. Alternatively, the turbine blade may be coupled to the turbine rotor disk by using a separate coupling device, e.g., a fastener such as a key or a bolt, other than the above-mentioned coupling scheme.

Here, the turbine rotor disk 54 and the turbine blade 420 are generally coupled to each other in a tangential type or an axial type scheme. The present embodiment employs a so-called axial type scheme in which the turbine blade root part 422 is inserted into the turbine blade coupling slot in the axial direction of the rotor 50, as described above. Accordingly, in the present embodiment, a plurality of turbine blade coupling slots may be formed. The plurality of turbine blade coupling slots may be arranged along a circumferential direction of the turbine rotor disk 54.

In this embodiment, a plurality of turbine vanes 440 may be provided. The plurality of turbine vanes 440 may form a multi-stage structure along the axial direction of the rotor 50. Here, the turbine vanes 440 and the turbine blades 420 may be alternately arranged along the air flow direction.

In the present embodiment, as shown in FIG. 1, since the turbine blades 420 may form the 4-stage structure, the turbine vanes 440 may also form a 4-stage structure, in which a first stage turbine vane 444, a second stage turbine vane 445, a third stage turbine vane 446, and a fourth stage turbine vane 447 are arranged in sequence from the upstream side to the downstream side along the axial direction of the rotor 50 and are disposed in front (at the upstream side) of the respective stages of the turbine blades. However, the present disclosure is not limited to this. For example, the number of stages of turbine vanes may be less than or greater than four.

Furthermore, a plurality of turbine vanes 440 may be provided in each stage, and may be radially formed and arranged along the rotation direction of the rotor 50.

Here, unlike the compressor 200, the turbine 400 makes contact with high-temperature and high-pressure combustion gas. Hence, the turbine 400 requires a cooling unit for preventing damage such as thermal deterioration.

Therefore, the gas turbine in accordance with the present embodiment includes an external cooling system of extracting compressed air from some portions of the compressor 200 to the outside of the casing 100 and supplying the compressed air (cooling air) to the turbine 400, particularly without passing the cooling air through the interior of the rotor 50. Detailed descriptions pertaining to this will be made later herein.

In the gas turbine 1 having the above-mentioned configuration, air drawn into the casing 100 is compressed by the compressor 200. The air compressed by the compressor 200 is mixed with fuel by the combustors 300, and the fuel mixture is combusted by the combustors 300, so that combustion gas is generated. The combustion gas generated by the combustors 300 is drawn into the turbine 400. The combustion gas drawn into the turbine 400 passes through the turbine blades 420 and thus rotates the rotor 50, before being discharged to the atmosphere through the diffuser. The rotor 50 that is rotated by the combustion gas may drive the compressor 200 and the generator. In other words, some of mechanical energy obtained from the turbine 400 may be supplied as energy needed for the compressor 200 to compress air, and the other mechanical energy may be used to produce electricity in the generator.

Here, the above-described gas turbine is only an embodiment of the present disclosure, and the external cooling system according to an embodiment of the present disclosure, which will be described in detail later herein, may be applied to all general gas turbines.

Hereinafter, the external cooling system in accordance with an embodiment of the present disclosure which may be applied to a gas turbine will be described.

The external cooling system in accordance with the present disclosure chiefly includes a plurality of external cooling passages 500, an outlet cooling passage 600, and at least one connection cooling passage 700. The plurality of external cooling passages 500 are configured to extract air from different positions of the compressor 200 to the outside of the casing 100 and supply the air to the turbine 400. The outlet cooling passage 600 is configured to extract air out of an outlet of the compressor 200 and supply the air to the turbine 400. The at least one connection cooling passage 700 couples the cooling passages of a pair of turbine blade 420 and turbine vane 440 disposed in at least the same stage so that the cooling passages communicate with each other.

Hereinafter, descriptions will be made based on the external cooling system for cooling the turbine vanes 440 and the turbine blades 420 that form a 4-stage structure, as described above. However, the present disclosure is not limited to this. For example, the present disclosure may also be applied to a structure for cooling turbine vanes and turbine blades of which the number of stages is less or greater than four.

First, an external cooling system in accordance with a first embodiment of the present disclosure will be described with reference to FIG. 2. The outlet cooling passage 600 supplies air both to the first stage turbine vane 444 of the plurality of turbine vanes 440 and to the first stage turbine blade 424 of the plurality of turbine blades 420. In other words, the outlet cooling passage 600 includes an outlet-outside cooling passage 620 for supplying air to the first stage turbine vane 444, and a first outlet-inside cooling passage 640 for supplying air to the first stage turbine blade 424.

Here, the outlet-outside cooling passage 620 may extract compressed air from the outlet of the compressor 200 to the outside of the casing 100 and directly supply the compressed air to the first stage turbine vane 444. The first outlet-inside cooling passage 640 may be formed through a lower end of the first stage turbine blade 424 such that compressed air is extracted from the outlet of the compressor 200 into the inside of the casing 100 and supplied into a lower portion of the first stage turbine blade 424.

Therefore, compressed air may be supplied from the outlet of the compressor 200 to the first stage turbine vane 444 and the first stage turbine blade 424, whereby the turbine vane and the turbine blade may be cooled.

Here, although air that is supplied through the outlet-outside cooling passage 620 has been described as being directly supplied to the first stage turbine vane 444 without any separate heat exchange, a separate fourth cooler 840 may be disposed at the first outlet-inside cooling passage 640, whereby the first stage turbine blade 424 may be more efficiently cooled by cooling the air that is supplied through the outlet-outside cooling passage 620.

Furthermore, at least one or more cooling air control valves may be provided at inlets or paths of the outlet-outside cooling passage 620 and the first outlet-inside cooling passage 640. In the present embodiment, one cooling air control valve 622 or 642 is installed at each of the outlet-outside cooling passage 620 and the first outlet-inside cooling passage 640.

Consequently, the flow rate of cooling air to be supplied to the first stage turbine vane 444 and the first stage turbine blade 424 may be easily controlled.

A plurality of external cooling passages 500 may supply air both to at least one turbine vane of the plurality of turbine vanes 440 other than the first stage turbine vane 444, and to at least one of turbine blades of stages, in which the connection cooling passage 700 is not formed, among the plurality of turbine blades 420 other than the first stage turbine blade 424.

In more detail, in the present embodiment, the plurality of external cooling passages 500 may supply air to the second stage turbine vane 445, the third stage turbine vane 446, and the fourth stage turbine vane 447 other than the first stage turbine vane 444. In addition, connection cooling passages 700 are respectively formed on pairs of turbine blades and turbine vanes of second and third stages, as described below. Hence, the plurality of external cooling passages 500 may be configured to supply air to the fourth stage turbine blade 427, in which the connection cooling passage 700 is not formed, among the turbine blades other than the first stage turbine blade 424.

In other words, the plurality of external cooling passages 500 may include a first external cooling passage 510 for supplying air to the fourth stage turbine vane 447 and the fourth stage turbine blade 427, a second external cooling passage 520 for supplying air to the third stage turbine vane 446, and a third external cooling passage 530 for supplying air to the second stage turbine vane 445.

Here, the first to third external cooling passages 510, 520, and 530 may be extended from respective different positions of the compressor 200, and the positions at which the first to third external cooling passages 510, 520, and 530 are extended from the compressor 200 may be arranged in succession from a position distant from the turbine 400 to a position near thereto.

In other words, the compressor 200 may be divided into a front stage compressor, a middle stage compressor, and a rear stage compressor in a sequence from a position distant from the turbine 400 to a position near thereto. The first to third external cooling passages 510, 520, and 530 may be respectively extended from the front, middle, and rear stage compressors.

Furthermore, in the present embodiment, although the cooling passage for supplying air to the fourth stage turbine vane 447 and the fourth stage turbine blade 427 has been illustrated as diverging from the single external cooling passage 510 into two passages, it is not limited thereto. For example, separate cooling passages may be used.

As described above, the plurality of external cooling passages 500 and the outlet cooling passage 600 are coupled to internal cooling passages of the turbine blades or the turbine vanes, to which cooling air is to be supplied, so that the plurality of external cooling passages 500 and the outlet cooling passage 600 communicate with film cooling holes formed the surfaces of the turbine blades and the turbine vanes. Thus, cooling air supplied through the cooling passages may be provided evenly to the surfaces of the turbine blades or the turbine valves, whereby the turbine blades or the turbine vanes may be cooled in a so-called film-cooling manner by the cooling air.

Here, the connection cooling passage 700 may be formed to cool, using cooling air supplied to the turbine vane 440, the turbine blade 420 disposed at the same stage as that of the turbine vane 440, i.e., the turbine blade 420 disposed at the rear of the turbine vane 440. The connection cooling passage 700 makes it possible for the cooling passages of the turbine blade and the turbine vane disposed at the same stage to form one cooling circuit and communicated with each other.

In the present embodiment, the connection cooling passage 700 is formed in each of the second and third stages, and includes a first connection cooling passage 710 which connects the cooling passages of the second stage turbine vane 445 and the second stage turbine blade 425 with each other into one passage, and a second connection cooling passage 720 which connects the cooling passages of the third stage turbine vane 446 and the third stage turbine blade 426 with each other into one passage.

The connection cooling passage 700 may extend through the lower ends of the turbine blade 420 and the turbine vane 440 that are disposed at the same stage so that air is drawn into the lower portion of the turbine blade 420.

In more detail, the connection cooling passage 700 may be formed such that cooling air supplied into the turbine vane 440 flows to the lower end of the turbine vane 440, is stored in a U-ring space formed in the lower end of the turbine vane 440 or in a space between the turbine rotor disks 54, and then flows to an upper end of the turbine blade 420 disposed at the same stage through the lower end of the turbine blade 420, i.e., through the root part 422 of the turbine blade.

Hence, even when cooling air is supplied to only the third stage turbine vane 446 and the second stage turbine vane 445 through the second external cooling passage 520 and the third external cooling passage 530, respectively, the third stage turbine blade 426 and the second stage turbine blade 425 may also be cooled at one time through the second connection cooling passage 720 and the first connection cooling passage 710.

Furthermore, a second cooler 820 and a third cooler 830 may be respectively disposed on the second external cooling passage 520 and the third external cooling passage 530 so as to cool air that is supplied through the cooling passages, whereby the turbine blade and the turbine vane can be more efficiently cooled.

In addition, a first cooler 810 may also be disposed on the first external cooling passage 510 so as to cool air that is supplied through the cooling passage, whereby the turbine blade and the turbine vane can be more efficiently cooled.

However, the present disclosure is not limited to this. For example, the first cooler may be omitted.

The first to fourth coolers 810, 820, 830, and 840 may cool air flowing through the respective cooling passages to different temperatures. In other words, depending on the temperature of the turbine blade 420 or the turbine vane 440 to which cooling air is to be supplied through the corresponding cooling passage, the cooling air may be cooled to an appropriate temperature before being supplied to the turbine blade 420 or the turbine vane 440, whereby the efficiency may be enhanced.

Furthermore, at least one or more cooling air control valves may be provided on inlets or paths of the first to third external cooling passages 510, 520, and 530. In the present embodiment, one cooling air control valve 512, 522, 532 is installed on each of the first to third external cooling passages 510, 520, and 530.

Consequently, the flow rate of cooling air to be supplied to the turbine blade and the turbine vane of each stage may be easily controlled. A sensor is provided in the generator or other apparatus that is part of or related to the gas turbine, and the temperature of each apparatus may be determined using the sensor. Based on the temperature of the apparatus, the supply rate of cooling air may be controlled.

Furthermore, pre-swirlers 920 may be respectively provided at a position of the first outlet-inside cooling passage 640 at which air is drawn into the lower portion of the first stage turbine blade 424 and at a position of the connection cooling passage 700 at which air is drawn into the lower portions of the second stage turbine blade 425 and the third stage turbine blade 426.

However, the present disclosure is not limited to this. The pre-swirler 920 may be provided in only at least one of the positions at which air is drawn into the lower portions of the first to third stage turbine blades 424 to 426.

In FIG. 4, there is illustrated the pre-swirler 920 disposed at a position of the first outlet-inside cooling passage 640 at which air is drawn into the lower portion of the first stage turbine blade 424. The position at which the pre-swirler 920 is disposed or the structures of the first outlet-inside cooling passage 640 and the other components may be changed depending on the type of gas turbine.

As shown in FIG. 5, the pre-swirler 920 may be configured in the form of a plurality of airfoils or holes, and may function to swirl air that is linearly drawn toward the turbine blade 420. Thereby, the cooling effect may be enhanced.

Furthermore, sealing members 940 (shown in FIG. 4) may be respectively provided at a position of the first outlet-inside cooling passage 640 at which air is drawn into the lower portion of the first stage turbine blade 424 and at a position of the connection cooling passage 700 at which air is drawn into the lower portions of the second stage turbine blade 425 and the third stage turbine blade 426.

However, the present disclosure is not limited to this. The sealing members 940 may be provided in only at least one of the positions at which air is drawn into the lower portions of the first to third stage turbine blades 424 to 426.

In FIG. 4, there is illustrated the sealing members 940 disposed at positions of the first outlet-inside cooling passage 640 at which air is drawn into the lower portion of the first stage turbine blade 424. The position at which the sealing member 940 is disposed or the structures of the first outlet-inside cooling passage 640 and the other components may be changed depending on the type of gas turbine.

The sealing members 940 function to prevent cooling air from flowing through unnecessary passages such that cooling passages may be formed to be suitable for each configuration type of the present disclosure.

Here, each sealing member 940 may be formed in various ways, e.g., using a labyrinth seal, or a brush seal, so long as it can be used as a member for sealing.

Next, an external cooling system in accordance with a second embodiment of the present disclosure will be described with reference to FIG. 3. The external cooling system in accordance with the second embodiment of the present disclosure is only partially different from the external cooling system in accordance with the first embodiment, and the other configuration and effect thereof remain the same as those of the external cooling system in accordance with the first embodiment. The differences from the first embodiment is that the outlet cooling passage 600 supplies air to the first stage turbine vane 444 of the plurality of turbine vanes 440 and to the first stage turbine blade 424 and the second stage turbine blade 425 of the plurality of turbine blades 420, and the connection cooling passage 700 is formed in only the third stage without being formed in the second stage. The following description will be focused on the differences.

In the present embodiment, the outlet cooling passage 600 may supply air to the first stage turbine vane 444 of the plurality of turbine vanes 440 and to the first stage turbine blade 424 and the second stage turbine blade 425 of the plurality of turbine blades 420. In other words, the outlet cooling passage 600 includes an outlet-outside cooling passage 620 for supplying air to the first stage turbine vane 444, a first outlet-inside cooling passage 640 for supplying air to the first stage turbine blade 424, and a second outlet-inside cooling passage 660 for supplying air to the second stage turbine blade 425.

The outlet-outside cooling passage 620 and the first outlet-inside cooling passage 640 are the same as those of the first embodiment. As shown in the present embodiment, the second outlet-inside cooling passage 660 may diverge and extend from the first outlet-inside cooling passage 640, but it is not limited thereto. For example, the first outlet-inside cooling passage 640 and the second outlet-inside cooling passage 660 may be separately provided to form different extraction lines extending from the outlet of the compressor 200..

Here, in the same manner as the first outlet-inside cooling passage 640 that is formed through the lower end of the first stage turbine blade 424 such that compressed air is extracted from the outlet of the compressor 200 into the casing 100 and drawn into the lower portion of the first stage turbine blade 424, the second outlet-inside cooling passage 660 may also be formed through the lower portion of the second stage turbine blade 425.

Therefore, compressed air may be supplied from the outlet of the compressor 200 to the first stage turbine vane 444, the first stage turbine blade 424, and the second stage turbine blade 425, whereby the turbine vane and the turbine blades may be cooled.

In the present embodiment, one cooling air control valve 622, 642, or 662 may be respectively installed on each of the outlet-outside cooling passage 620, the first outlet-inside cooling passage 640, and the second outlet-inside cooling passage 660.

Consequently, the flow rate of cooling air to be supplied to the first stage turbine vane 444, the first stage turbine blade 424, and the second stage turbine blade 425 may be easily controlled.

In the present embodiment, in the same manner as the first embodiment, the plurality of external cooling passages 500 may include a first external cooling passage 510 for supplying air to the fourth stage turbine vane 447 and the fourth stage turbine blade 427, a second external cooling passage 520 for supplying air to the third stage turbine vane 446, and a third external cooling passage 530 for supplying air to the second stage turbine vane 445.

Furthermore, in the present embodiment, the connection cooling passage 700 is formed in only the third stage without being formed in the second stage. In other words, only the second connection cooling passage 720 that connects the cooling passages of the third stage turbine vane 446 and the third stage turbine blade 426 with each other into one passage is formed, and the second stage turbine blade 425 is supplied with cooling air by the second outlet-inside cooling passage 660. Therefore, even when the connection cooling passage 700 is formed in only the third stage, cooling air may be supplied to all of the turbine blades and the turbine vanes that form the 4-stage structure.

Furthermore, pre-swirlers may be respectively provided at positions of the first outlet-inside cooling passage 640 and the second outlet-inside cooling passage 660 at which air is drawn into the lower portions of the first stage turbine blade 424 and the second stage turbine blade 425, and at a position of the second connection cooling passage 720 at which air is drawn into the lower portion of the third stage turbine blade 426.

Furthermore, sealing members may be respectively provided at positions of the first outlet-inside cooling passage 640 and the second outlet-inside cooling passage 660 at which air is drawn into the lower portions of the first stage turbine blade 424 and the second stage turbine blade 425, and at a position of the second connection cooling passage 720 at which air is drawn into the lower portion of the third stage turbine blade 426.

On the one hand, a method of cooling the gas turbine including a casing 100, and a compressor 200, a combustor 300, and a turbine 400 which are disposed in the casing 100 in accordance with an embodiment of the present disclosure may include an external cooling air supply operation of extracting air from different positions of the compressor 200 to the outside of the casing 100 and supplying the air to the turbine 400, and an outlet cooling air supply operation of extracting air from the compressor 200 and supplying the air to the turbine 400.

Here, the air supplied in the external cooling air supply operation may simultaneously cool a pair of turbine blade 420 and turbine vane 440 of the turbine that are disposed in at least one same stage.

In other words, based on the external cooling system in accordance with the first embodiment, the external cooling air supply operation may be an operation of supplying cooling air to the second to fourth stage turbine vanes 445, 446, and 447 and the fourth stage turbine blade 427 through the first to third external cooling passages 510, 520, and 530.

Furthermore, the outlet cooling air supply operation may be an operation of supplying cooling air to the first stage turbine vane 444 and the first stage turbine blade 424 through the outlet-outside cooling passage 620 and the first outlet-inside cooling passage 640, respectively.

Here, the air that is supplied in the external cooling air supply operation may also simultaneously cool the pairs of turbine blades and turbine vanes of the second and third stages through the first connection cooling passage 710 and the second connection cooling passage 720 that are respectively formed in the second and third stages.

In other words, cooling air supplied to the second stage turbine vane 445 by the third external cooling passage 530 may flow to the second stage turbine blade 425 through the first connection cooling passage 710 and cool the second stage turbine vane 445 and the second stage turbine blade 425. Cooling air supplied to the third stage turbine vane 446 by the second external cooling passage 520 may flow to the third stage turbine blade 426 through the second connection cooling passage 720 and cool the third stage turbine vane 446 and the third stage turbine blade 426.

Furthermore, the external cooling air supply operation may include a flow rate control operation of controlling the flow rate of cooling air using at least one or more cooling air control valves provided on inlets or paths of the plurality of external cooling passages for extracting air from different positions of the compressor 200 to the outside of the casing 100 and supplying the air to the turbine.

In other words, in the flow rate control operation, the flow rate of cooling air may be controlled by the single cooling air control valves 512, 522, and 532 that are respectively installed on the first to third external cooling passages 510, 520, and 530.

Consequently, the flow rate of cooling air to be supplied to the turbine blade and the turbine vane of each stage may be easily controlled. By the sensor provided in the generator or other apparatus in or related to the gas turbine, the temperature of each apparatus may be determined. Based on the temperature of the apparatus, the supply rate of cooling air may be controlled.

Furthermore, the flow rates of cooling air to be supplied to the first stage turbine vane 444 and the first stage turbine blade 424 may also be easily controlled by the single cooling air control valves 622 and 642 that are respectively installed on the outlet-outside cooling passage 620 and the first outlet-inside cooling passage 640.

According to the gas turbine including the external cooling system and the method of cooling the gas turbine in accordance with the present disclosure, the cooling air supply passage of drawing air out of the compressor 200 of the gas turbine and diverting the air to the outside is employed, and the vanes and the blades of the turbine 400 are cooled by such cooling air supply passage. Consequently, the consumption of cooling air may be reduced while cooling effect is maintained, and the flow rate of cooling air by blades/vanes of the turbine may be more easily controlled.

Furthermore, air of the plurality of external cooling passages and the outlet-inside cooling passages may be cooled to different temperatures by the plurality of coolers before being supplied to the turbine.

In addition, a pre-swirler and a sealing structure may be applied to each turbine blade stage of the turbine, whereby the cooling effect may be enhanced.

Ultimately, various structure and partial load performance of the gas turbine may be improved.

While the present disclosure has been described with respect to the specific embodiments, it will be apparent to those skilled in the art that various changes and modifications may be made without departing from the scope of the disclosure as defined in the following claims.

## Claims

1. A gas turbine comprising:
a casing (100);
a compressor (200) in the casing (100) and configured to draw air thereinto and compress the air to a high pressure;
a combustor (300) configured to mix fuel with the air compressed by the compressor (200) and combust a mixture of the fuel and the air;
a turbine (400) configured to rotate a plurality of turbine blades (420) using high-temperature and high-pressure combustion gas discharged from the combustor (300) to generate electricity, wherein the turbine (400) comprises the plurality of turbine blades (420), and a plurality of turbine vanes (440) fixed to the casing (100) and arranged alternately with the turbine blades (420);
a plurality of external cooling passages (500) configured to extract air from different positions of the compressor (200) to an outside of the casing (100), and supply cooling air to the turbine (400) without having the cooling air pass through a central shaft (50) of the turbine (400), wherein the plurality of external cooling passages (500) supply air to at least one turbine vane (445, 446, 447) of the plurality of turbine vanes (440) other than a first stage turbine vane (444); and
an outlet cooling passage (600) configured to extract air from an outlet of the compressor (200) and supply cooling air to the turbine (400) without having the cooling air pass through the central shaft (50) of the turbine (400), wherein the outlet cooling passage (600) comprises:
an outlet-outside cooling passage configured to extract air from the outlet of the compressor (200) to the outside of the casing (100) and supply the air to the first stage turbine vane (444) of the plurality of turbine vanes (440), and
an outlet-inside cooling passage configured to extract air from the outlet of the compressor (200) into the inside of the casing (100) and supply the air to a first stage turbine blade (424) of the plurality of turbine blades (420);
the gas turbine (1) further comprising at least one connection cooling passage (700) configured to connect corresponding cooling passages of a pair structure having one turbine blade (420) and one turbine vane (440), which are disposed in at least one identical stage among the turbine blades (420) and the turbine vanes (440).

2. The gas turbine according to claim 1, wherein the plurality of external cooling passages (500) supply air to at least one of turbine blades (420) of stages, in which the connection cooling passage (700) is not formed, among the plurality of turbine blades (420) other than the first stage turbine blade (424).

3. The gas turbine according to claim 1 or 2, wherein the plurality of external cooling passages (500) comprises:
a first external cooling passage (510) configured to supply air to a fourth stage turbine vane (447) and a fourth stage turbine blade (427);
a second external cooling passage (520) configured to supply air to a third stage turbine vane (446); and
a third external cooling passage (530) configured to supply air to a second stage turbine vane (445),
wherein the connection cooling passage is formed in each of the pairs of turbine blades (400) and turbine vanes of the second and third stages.

4. The gas turbine according to claim 1 or 2, wherein the outlet cooling passage (600) comprises:
a second outlet-inside cooling passage (660) configured to supply air to the second stage turbine blade (425), wherein the plurality of external cooling passages (500) comprises:
a first external cooling passage (510) configured to supply air to a fourth stage turbine vane (447) and a fourth stage turbine blade (427);
a second external cooling passage (520) configured to supply air to a third stage turbine vane (446); and
a third external cooling passage (530) configured to supply air to a second stage turbine vane (445),
wherein the connection cooling passage is formed in the pair of turbine blade (400) and turbine vane of the third stage.

5. The gas turbine according to any one of the preceding claims 1 to 4, wherein the plurality of external cooling passages (500) extract air from respective different positions of the compressor (200), and, as a stage number of a turbine vane to which air is to be supplied increases, a distance between the turbine and the position at which the corresponding external cooling passage extracts the air is increased.

6. The gas turbine according to any one of the preceding claims 1 to 5, further comprising a cooling unit configured to cool air flowing through at least one passage of the plurality of external cooling passages (500) and the outlet-inside cooling passage (610).

7. The gas turbine according to claim 6, wherein the cooling unit cools air flowing through the respective passages to different temperatures.

8. The gas turbine according to any one of the preceding claims 1 to 7, wherein at least one cooling air control valve (512, 522, 532) is provided on an inlet or path of each of the plurality of external cooling passages (500).

9. The gas turbine according to any one of the preceding claims 1 to 8, wherein at least one cooling air control valve (622, 642) is provided on an inlet or path of each of the outlet-outside cooling passage (620) and the outlet-inside cooling passage.

10. The gas turbine according to any one of the preceding claims 1 to 9, wherein the connection cooling passage extends through lower ends of the turbine blade and the turbine vane that are disposed in an identical stage such that air is drawn into a lower portion of the turbine blade.

11. The gas turbine according to any one of the preceding claims 1 to 11, wherein the outlet-inside cooling passage is formed through a lower end of the corresponding turbine blade such that air is drawn into a lower portion of the corresponding turbine blade.

12. The gas turbine according to any one of the preceding claims 1 to 11, wherein a pre-swirler is provided on at least one of a position of the first outlet-inside cooling passage at which air is drawn into the lower portion of the corresponding turbine blade and a position of the connection cooling passage at which air is drawn into the lower portion of the corresponding turbine blade.

13. The gas turbine according to any one of the preceding claims 1 to 12, wherein a sealing member is provided on at least one of a position of the first outlet-inside cooling passage at which air is drawn into the lower portion of the corresponding turbine blade and a position of the connection cooling passage at which air is drawn into the lower portion of the corresponding turbine blade.

## Patentansprüche

1. Gasturbine, die Folgendes umfasst:
ein Gehäuse (100);
einen Verdichter (200) in dem Gehäuse (100), der dazu ausgelegt ist, Luft dort hinein zu saugen und die Luft auf einen hohen Druck zu verdichten;
eine Brennkammer (300), die dazu ausgelegt ist, Kraftstoff mit der von dem Verdichter (200) verdichteten Luft zu mischen und ein Gemisch aus Kraftstoff und Luft zu verbrennen;
eine Turbine (400), die dazu ausgelegt ist, mehrere Turbinenlaufschaufeln (420) unter Verwendung von aus der Brennkammer (300) abgegebenem Hochtemperatur- und Hochdruckverbrennungsgas zu drehen und Elektrizität zu erzeugen, wobei die Turbine (400) mehrere Turbinenlaufschaufeln (420) und mehrere Turbinenleitschaufeln (440), die an dem Gehäuse (100) fixiert und abwechselnd mit den Turbinenlaufschaufeln (420) angeordnet sind, umfasst;
mehrere externe Kühlkanäle (500), die dazu ausgelegt sind, Luft aus verschiedenen Positionen des Verdichters (200) zu einer Außenseite des Gehäuses (100) abzuführen und der Turbine (400) Kühlluft zuzuführen, ohne dass die Kühlluft durch eine Zentralwelle (50) der Turbine (400) strömen muss, wobei die mehreren externen Kühlkanäle (500) mindestens einer Turbinenleitschaufel (445, 446, 447) der mehreren Turbinenleitschaufeln (440) mit Ausnahme der Erststufen-Turbinenleitschaufel (440) Luft zuführen; und
einen Auslasskühlkanal (600), der dazu ausgelegt ist, Luft aus einem Auslass des Verdichters (200) abzuführen und der Turbine (400) Kühlluft zuzuführen, ohne dass die Kühlluft durch die Zentralwelle (50) der Turbine (400) strömen muss, wobei der Auslasskühlkanal (600) umfasst:
einen Außen-Auslasskühlkanal umfasst, der dazu ausgelegt ist, Luft aus dem Auslass des Verdichters (200) zu der Außenseite des Gehäuses (100) abzuführen und die Luft der Erststufen-Turbinenleitschaufel (444) der mehreren Turbinenleitschaufeln (440) zuzuführen, und
einen Innen-Auslasskühlkanal, der dazu ausgelegt ist, Luft aus dem Auslass des Verdichters (200) zu der Innenseite des Gehäuses (100) abzuführen und die Luft einer Erststufen-Turbinenlaufschaufel (424) der mehreren Turbinenlaufschaufeln (420) zuzuführen;
wobei die Gasturbine (1) ferner mindestens einen Verbindungskühlkanal (700) umfasst, der dazu ausgelegt ist, entsprechende Kühlkanäle einer Paarstruktur mit einer Turbinenlaufschaufel (420) und einer Turbinenleitschaufel (440) zu verbinden, die in mindestens einer identischen Stufe unter den Turbinenlaufschaufeln (420) und den Turbinenleitschaufeln (440) angeordnet sind.

2. Gasturbine nach Anspruch 1, wobei die mehreren externen Kühlkanäle (500) mindestens einer der Turbinenlaufschaufeln (420) von Stufen, in denen der Verbindungskühlkanal (700) nicht ausgebildet ist, unter den mehreren Turbinenlaufschaufeln (420) mit Ausnahme der Erststufen-Turbinenlaufschaufel (424) Luft zuführen.

3. Gasturbine nach Anspruch 1 oder 2, wobei die mehreren externen Kühlkanäle (500) umfassen:
einen ersten externen Kühlkanal (510), der dazu ausgelegt ist, einer Viertstufen-Turbinenleitschaufel (447) und einer Viertstufen-Turbinenlaufschaufel (427) Luft zuzuführen;
einen zweiten externen Kühlkanal (520), der dazu ausgelegt ist, einer Drittstufen-Turbinenleitschaufel (446) Luft zuzuführen; und
einen dritten externen Kühlkanal (530), der dazu ausgelegt ist, einer Zweitstufen-Turbinenleitschaufel (445) Luft zuzuführen,
wobei der Verbindungskühlkanal in jedem der Paare von Turbinenlaufschaufeln (400) und Turbinenleitschaufeln der zweiten und dritten Stufe ausgebildet ist.

4. Gasturbine nach Anspruch 1 oder 2, wobei der Auslasskühlkanal (600) umfasst:
einen zweiten Innen-Auslasskühlkanal (660), der dazu ausgelegt ist, der Zweitstufen-Turbinenlaufschaufel (425) Luft zuzuführen, wobei die mehreren externen Kühlkanäle (500) umfassen:
einen ersten externen Kühlkanal (510), der dazu ausgelegt ist, einer Viertstufen-Turbinenleitschaufel (447) und einer Viertstufen-Turbinenlaufschaufel (427) Luft zuzuführen;
einen zweiten externen Kühlkanal (520), der dazu ausgelegt ist, einer Drittstufen-Turbinenleitschaufel (446) Luft zuzuführen; und
einen dritten externen Kühlkanal (530), der dazu ausgelegt ist, einer Zweitstufen-Turbinenleitschaufel (445) Luft zuzuführen,
wobei der Verbindungskühlkanal in dem Paar von Turbinenlaufschaufel (400) und Turbinenleitschaufel der dritten Stufe ausgebildet ist.

5. Gasturbine nach einem der vorhergehenden Ansprüche 1 bis 4, wobei die mehreren externen Kühlkanäle (500) Luft aus jeweils unterschiedlichen Positionen des Verdichters (200) abführen und sich mit Zunahme der Stufennummer einer Turbinenleitschaufel, der Luft zugeführt werden soll, ein Abstand zwischen der Turbine und der Position, an der der entsprechende externe Kühlkanal die Luft abführt, vergrößert.

6. Gasturbine nach einem der vorhergehenden Ansprüche 1 bis 5, die ferner eine Kühleinheit umfasst, die dazu ausgelegt ist, Luft zu kühlen, die durch mindestens einen Kanal der mehreren externen Kühlkanäle (500) und des Innen-Auslasskühlkanals (610) strömt.

7. Gasturbine nach Anspruch 6, wobei die Kühleinheit die durch die jeweiligen Kanäle strömende Luft auf unterschiedliche Temperaturen abkühlt.

8. Gasturbine nach einem der vorhergehenden Ansprüche 1 bis 7, wobei mindestens ein Kühlluftsteuerventil (512, 522, 532) an einem Einlass oder Pfad jedes der mehreren externen Kühlkanäle (500) bereitgestellt ist.

9. Gasturbine nach einem der vorhergehenden Ansprüche 1 bis 8, wobei mindestens ein Kühlluftsteuerventil (622, 642) an einem Einlass oder Pfad jedes des Außen-Auslasskühlkanals (620) und des Innen-Auslasskühlkanals bereitgestellt ist.

10. Gasturbine nach einem der vorhergehenden Ansprüche 1 bis 9, wobei sich der Verbindungskühlkanal durch untere Enden der Turbinenlaufschaufel und der Turbinenleitschaufel erstreckt, die in einer identischen Stufe angeordnet sind, so dass Luft in einen unteren Abschnitt der Turbinenlaufschaufel gesaugt wird.

11. Gasturbine nach einem der vorhergehenden Ansprüche 1 bis 11, wobei der Innen-Auslasskühlkanal durch ein unteres Ende der entsprechenden Turbinenlaufschaufel so ausgebildet ist, dass Luft in einen unteren Abschnitt der entsprechenden Turbinenlaufschaufel gesaugt wird.

12. Gasturbine nach einem der vorhergehenden Ansprüche 1 bis 11, wobei ein Vorverwirbler an einer Position des ersten Innen-Auslasskühlkanals, an der Luft in den unteren Abschnitt der entsprechenden Turbinenlaufschaufel gesaugt wird, und/oder einer Position des Verbindungskühlkanals, an der Luft in den unteren Abschnitt der entsprechenden Turbinenlaufschaufel gesaugt wird, bereitgestellt ist.

13. Gasturbine nach einem der vorhergehenden Ansprüche 1 bis 12, wobei ein Dichtungselement an einer Position des ersten Innen-Auslasskühlkanals, an der Luft in den unteren Abschnitt der entsprechenden Turbinenlaufschaufel gesaugt wird, und/oder einer Position des Verbindungskühlkanals, an der Luft in den unteren Abschnitt der entsprechenden Turbinenlaufschaufel gesaugt wird, bereitgestellt ist.

## Revendications

1. Turbine à gaz comportant :
un carter (100) ;
un compresseur (200) dans le carter (100) et configuré pour aspirer de l'air dans celui-ci et comprimé l'air jusqu'à une pression élevée ;
une chambre de combustion (300) configurée pour mélanger du combustible avec l'air comprimé par le compresseur (200) et brûler un mélange du combustible et de l'air ;
une turbine (400) configurée pour faire tourner une pluralité d'aubes de turbine (420) en utilisant un gaz de combustion à haute température et à haute pression évacué à partir de la chambre de combustion (300) pour générer de l'électricité, dans laquelle la turbine (400) comporte la pluralité d'aubes de turbine (420), et une pluralité de pales de turbine (440) fixées au carter (100) et agencées de manière alternée avec les aubes de turbine (420) ;
une pluralité de passages de refroidissement externes (500) configurés pour extraire de l'air à partir de différentes positions du compresseur (200) vers un extérieur du carter (100), et fournir de l'air de refroidissement à la turbine (400) sans faire passer l'air de refroidissement à travers un arbre central (50) de la turbine (400), dans laquelle la pluralité de passages de refroidissement externes (500) fournissent l'air à au moins une pale de turbine (445, 446, 447) de la pluralité de pales de turbine (440) autre qu'une pale de turbine de premier étage (444) ; et
un passage de refroidissement de sortie (600) configuré pour extraire de l'air à partir d'une sortie du compresseur (200) et fournir de l'air de refroidissement à la turbine (400) sans faire passer l'air de refroidissement à travers l'arbre central (50) de la turbine (400), dans laquelle le passage de refroidissement de sortie (600) comporte :
un passage de refroidissement sortie-extérieur configuré pour extraire de l'air à partir de la sortie du compresseur (200) vers l'extérieur du carter (100) et fournir l'air à la pale de turbine de premier étage (444) de la pluralité de pales de turbine (440), et
un passage de refroidissement sortie-intérieur configuré pour extraire de l'air à partir de la sortie du compresseur (200) dans l'intérieur du carter (100) et fournir l'air à une pale de turbine de premier étage (424) de la pluralité de pales de turbine (420) ;
la turbine à gaz (1) comportant en outre au moins un passage de refroidissement de liaison (700) configuré pour relier des passages de refroidissement correspondants d'une structure appariée ayant une aube de turbine (420) et une pale de turbine (440), qui sont disposées dans au moins un étage identique parmi les aubes de turbine (420) et les pales de turbine (440).

2. Turbine à gaz selon la revendication 1, dans laquelle la pluralité de passages de refroidissement externes (500) fournissent de l'air à au moins une des aubes de turbine (420) d'étages, dans lesquels le passage de refroidissement de liaison (700) n'est pas formé, parmi la pluralité d'aubes de turbine (420) autres que l'aube de turbine de premier étage (424).

3. Turbine à gaz selon la revendication 1 ou 2, dans laquelle la pluralité de passages de refroidissement externes (500) comporte :
un premier passage de refroidissement externe (510) configuré pour fournir de l'air à une pale de turbine de quatrième étage (447) et une aube de turbine de quatrième étage (427) ;
un deuxième passage de refroidissement externe (520) configuré pour fournir de l'air à une pale de turbine de troisième étage (446) ; et
un troisième passage de refroidissement externe (530) configuré pour fournir de l'air à une pale de turbine de deuxième étage (445),
dans laquelle le passage de refroidissement de liaison est formé dans chacune des paires d'aubes de turbine (400) et de pales de turbine des deuxième et troisième étages.

4. Turbine à gaz selon la revendication 1 ou 2, dans laquelle le passage de refroidissement de sortie (600) comporte :
un second passage de refroidissement sortie-intérieur (660) configuré pour fournir de l'air à l'aube de turbine de deuxième étage (425), dans laquelle la pluralité de passages de refroidissement externes (500) comporte :
un premier passage de refroidissement externe (510) configuré pour fournir de l'air à une pale de turbine de quatrième étage (447) et une aube de turbine de quatrième étage (427) ;
un deuxième passage de refroidissement externe (520) configuré pour fournir de l'air à une pale de turbine de troisième étage (446) ;
un troisième passage de refroidissement externe (530) configuré pour fournir de l'air à une pale de turbine de deuxième étage (445),
dans laquelle le passage de refroidissement de liaison est formé dans la paire constituée de l'aube de turbine (400) et de la pale de turbine du troisième étage.

5. Turbine à gaz selon l'une quelconque des revendications 1 à 4 précédentes, dans laquelle la pluralité de passages de refroidissement externes (500) extraient de l'air à partir de différentes positions respectives du compresseur (200), et, lorsque le nombre d'étages d'une pale de turbine à laquelle de l'air doit être fourni augmente, une distance entre la turbine et la position à laquelle le passage de refroidissement externe correspondant extrait l'air est augmentée.

6. Turbine à gaz selon l'une quelconque des revendications 1 à 5 précédentes, comportant en outre une unité de refroidissement configurée pour refroidir de l'air s'écoulant à travers au moins un passage de la pluralité de passages de refroidissement externes (500) et le passage de refroidissement sortie-intérieur (610).

7. Turbine à gaz selon la revendication 6, dans laquelle l'unité de refroidissement refroidit de l'air s'écoulant à travers les passages respectifs jusqu'à différentes températures.

8. Turbine à gaz selon l'une quelconque des revendications 1 à 7 précédentes, dans laquelle au moins une soupape de commande d'air de refroidissement (512, 522, 532) est agencée sur une entrée ou un trajet de chaque passage parmi la pluralité de passages de refroidissement externes (500).

9. Turbine à gaz selon l'une quelconque des revendications 1 à 8 précédentes, dans laquelle au moins une soupape de commande d'air de refroidissement (622, 642) est agencée sur une entrée ou un trajet de chaque passage parmi le passage de refroidissement extérieur de sortie (620) et le passage de refroidissement intérieur de sortie.

10. Turbine à gaz selon l'une quelconque des revendications 1 à 9 précédentes, dans laquelle le passage de refroidissement de liaison s'étend à travers des extrémités inférieures de l'aube de turbine et la pale de turbine qui sont disposées dans un étage identique de telle sorte que de l'air est aspiré dans une partie inférieure de la pale de turbine.

11. Turbine à gaz selon l'une quelconque des revendications 1 à 11 précédentes, dans laquelle le passage de refroidissement sortie-intérieur est formé à travers une extrémité inférieure de l'aube de turbine correspondante de telle sorte que de l'air est aspiré dans une partie inférieure de l'aube de turbine correspondante.

12. Turbine à gaz selon l'une quelconque des revendications 1 à 11 précédentes, dans laquelle un dispositif de pré-tourbillonnement est agencé sur au moins une position parmi une position du premier passage de refroidissement sortie-intérieur au niveau duquel de l'air est aspiré dans la partie inférieure de l'aube de turbine correspondante, et une position du passage de refroidissement de liaison au niveau duquel de l'air est aspiré dans la partie inférieure de l'aube de turbine correspondante.

13. Turbine à gaz selon l'une quelconque des revendications 1 à 12 précédentes, dans laquelle un organe d'étanchéité est agencé sur au moins une position parmi une position du premier passage de refroidissement sortie-intérieur au niveau duquel de l'air est aspiré dans la partie inférieure de l'aube de turbine correspondante, et une position du passage de refroidissement de liaison au niveau duquel de l'air est aspiré dans la partie inférieure de l'aube de turbine correspondante.
